# DEMANDE DE BREVET EUROPEEN

(11) **EP 4 468 132 A1**
(43) Date de publication de la demande: **27.11.2024**
(21) Numéro de dépôt: 24177593.1
(22) Date de dépôt: 23.05.2024
(51) Int. Cl.: G06F 3/04812, G06F 3/04886

(54) **INTERFACE HOMME-MACHINE DE COCKPIT D AERONEF**

(30) Priorité: 26.05.2023 FR 2305274
(71) Demandeur: Airbus Operations (S.A.S.), 31060 Toulouse Cedex 9 (FR)
(72) Inventeur: MAZOIN, Benjamin, 31060 TOULOUSE (FR)
(74) Mandataire: Cabinet Le Guen Maillet

(57) **Abrégé**

Un affichage sur un écran d'une interface homme-machine de cockpit d'aéronef comporte une zone de saisie de texte, une zone de carte de navigation, et au moins une autre zone. Un mode de pointage spécifique, actif lorsque qu'une saisie de texte est en cours, et un mode de pointage normal, actif sinon, sont implémentés. En mode de pointage normal, un pointage déclenche (503) la commande éventuellement associée à l'endroit où est réalisé le pointage. En mode de pointage spécifique, seulement un pointage sur la zone de saisie de texte ou sur la zone de carte de navigation déclenche (505) une commande éventuellement associée à l'endroit où est réalisé le pointage, alors qu'un pointage sur ladite au moins une autre zone déclenche (506) un abandon de la saisie de texte. Ainsi, des tâches de saisie de texte par un pilote de l'aéronef sont simplifiées.

## Description

### DOMAINE TECHNIQUE

La présente invention concerne une interface homme-machine pour aéronef. Plus particulièrement, la présente invention concerne une gestion de pointage pour un affichage sur un écran d'une interface homme-machine d'aéronef.

### ETAT DE LA TECHNIQUE ANTERIEURE

De façon usuelle, lorsqu'un pilote souhaite saisir une information au moyen d'une interface homme-machine (IHM) de cockpit d'un aéronef afin que cette information soit transmise à l'avionique de l'aéronef, le pilote effectue un pointage sur une zone de saisie de texte prévue dans un affichage sur un écran de l'interface homme-machine. Dans le cas d'une utilisation d'un dispositif de pointage (tel qu'une souris, ou une boule de commande (« trackball » en anglais), ou un pavé tactile (« touchpad » en anglais)), le pointage consiste à déplacer un curseur sur la zone de saisie de texte grâce au dispositif de pointage et à cliquer à cette position pour valider le pointage. Dans le cas d'une utilisation d'un écran tactile, le pointage consiste à toucher l'écran tactile (parfois avec plusieurs doigts, avec éventuellement un mouvement subséquent) sur la zone de saisie de texte en question.

Une fois le pointage effectué sur la zone de saisie de texte, le curseur est alors encagé dans la zone de saisie de texte. Souvent représenté par une barre verticale clignotante, le curseur reste encagé jusqu'à ce que le pilote valide ou abandonne la saisie de texte. Agir sur une autre partie de l'écran entraîne l'abandon de la saisie de texte et les informations déjà saisies, mais non validées, sont perdues.

Cela peut poser un problème lorsque le pilote souhaite consulter des informations sur une carte de navigation affichable à l'écran qui lui seraient nécessaires pour déterminer l'information qu'il doit saisir dans la zone de saisie de texte, voire agir sur cette carte de navigation (zoom, déplacement sur la carte de navigation, etc.). Cela peut être utile par exemple pour rechercher des informations relatives à un point de passage d'une trajectoire de l'aéronef que le pilote doit saisir dans la zone de saisie de texte. Ainsi, lorsque le pilote doit saisir des informations successives relatives à plusieurs points de passage, il doit au préalable consulter ces informations sur la carte de navigation, noter ces informations sur un papier, effectuer le pointage dans la zone de saisie de texte, et effectuer la saisie d'informations grâce à un clavier en reportant les informations notées sur le papier.

Il est alors souhaitable de pallier ces inconvénients de l'état de la technique. Il est notamment souhaitable de fournir une solution qui permette de simplifier des opérations de saisie de texte devant être réalisées par un pilote d'aéronef par le biais d'une telle interface homme-machine.

### EXPOSE DE L'INVENTION

Il est proposé ici un procédé de gestion de pointage pour un affichage sur un écran d'une interface homme-machine de cockpit d'aéronef, l'affichage comportant des zones parmi lesquelles une zone de saisie de texte, une zone de carte de navigation, et au moins une autre zone, chaque zone étant associée à des commandes réalisables par pointage sur ladite zone. Un contrôleur de l'interface homme-machine implémente deux modes de pointage, l'un dit mode de pointage spécifique qui est actif lorsque qu'une saisie de texte est en cours dans la zone de saisie de texte, et l'autre dit mode de pointage normal qui est actif lorsque qu'aucune saisie de texte est en cours dans la zone de saisie de texte, tels que : en mode de pointage normal, un pointage sur une dite zone déclenche la commande éventuellement associée à l'endroit où est réalisé le pointage sur la zone en question ; et en mode de pointage spécifique, un pointage sur la zone de saisie de texte ou sur la zone de carte de navigation déclenche la commande éventuellement associée à l'endroit où est réalisé le pointage sur la zone en question, et un pointage sur ladite au moins une autre zone déclenche un abandon de la saisie de texte, les commandes de ladite au moins une autre zone étant désactivées contrairement aux commandes de la zone de saisie de texte et de la zone de carte de navigation.

Ainsi, les opérations de saisie de texte devant être réalisées par un pilote d'aéronef par le biais de cette interface homme-machine sont simplifiées, grâce à l'implémentation de ces deux modes de pointage, permettant de saisir du texte tout en acceptant de manipuler une carte de navigation (aérienne ou aéroportuaire).

Dans un mode de réalisation particulier, le contrôleur affecte un clavier de l'interface homme-machine spécifiquement à la saisie de texte en mode de pointage spécifique et affecte le clavier à une utilisation générale de l'interface homme-machine en mode pointage normal.

Dans un mode de réalisation particulier, lorsqu'un abandon de la saisie de texte est déclenché, toute information saisie dans la zone de saisie de texte et non validée est enregistrée dans un historique de saisie, et une fonctionnalité d'accès à l'historique de saisie étant activée en mode de pointage spécifique et pas en mode de pointage normal.

Dans un mode de réalisation particulier, toute information saisie dans la zone de saisie de texte et validée est aussi enregistrée dans l'historique de saisie.

Dans un mode de réalisation particulier, lorsque la fonctionnalité d'accès à l'historique de saisie est activée, la zone de saisie de texte est étendue pour afficher l'historique de saisie de sorte à recouvrir partiellement une zone inactive en mode de pointage spécifique.

Il est aussi proposé ici un produit programme d'ordinateur comportant des instructions de code de programme causant une implémentation du procédé ci-dessus dans l'un quelconque de ses modes de réalisation, lorsque lesdites instructions sont exécutées par un processeur d'interface homme-machine de cockpit d'aéronef. Il est également proposé ici un support de stockage d'informations stockant un programme d'ordinateur comportant des instructions de code de programme causant une implémentation du procédé ci-dessus dans l'un quelconque de ses modes de réalisation, lorsque lesdites instructions sont lues et exécutées par un processeur d'interface homme-machine de cockpit d'aéronef.

Il est aussi proposé ici une interface homme-machine de cockpit d'aéronef comportant un écran et un contrôleur, le contrôleur comportant de la circuiterie électronique configurée pour effectuer une gestion de pointage pour un affichage sur l'écran, l'affichage comportant des zones parmi lesquelles une zone de saisie de texte, une zone de carte de navigation, et au moins une autre zone, chaque zone étant associée à des commandes réalisables par pointage sur ladite zone. La circuiterie électronique étant configurée pour implémenter deux modes de pointage, l'un dit mode de pointage spécifique qui est actif lorsque qu'une saisie de texte est en cours dans la zone de saisie de texte, et l'autre dit mode de pointage normal qui est actif lorsque qu'aucune saisie de texte est en cours dans la zone de saisie de texte, tels que : en mode de pointage normal, un pointage sur une dite zone déclenche la commande éventuellement associée à l'endroit où est réalisé le pointage sur la zone en question ; et en mode de pointage spécifique, un pointage sur la zone de saisie de texte ou sur la zone de carte de navigation déclenche la commande éventuellement associée à l'endroit où est réalisé le pointage sur la zone en question, et un pointage sur ladite au moins une autre zone déclenche un abandon de la saisie de texte, les commandes de ladite au moins une autre zone étant désactivées contrairement aux commandes de la zone de saisie de texte et de la zone de carte de navigation.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en perspective, un aéronef ;
[Fig. 2] illustre schématiquement un exemple d'affichage réalisé par une interface homme-machine de cockpit de l'aéronef ;
[Fig. 3] illustre schématiquement un algorithme de basculement d'un mode de pointage normal à un mode de pointage spécifique ;
[Fig. 4] illustre schématiquement un algorithme de basculement du mode de pointage spécifique au mode de pointage normal ;
[Fig. 5] illustre schématiquement un algorithme de procédé de gestion de pointage, selon si l'interface homme-machine est en mode de pointage spécifique ou en mode de pointage normal ;
[Fig. 6] illustre schématiquement l'exemple d'interface homme-machine de la Fig. 2 après avoir basculé en mode de pointage spécifique ; et
[Fig. 7] illustre schématiquement un exemple d'agencement matériel permettant d'implémenter l'interface homme-machine.

### EXPOSE DETAILLE DE MODES DE REALISATION

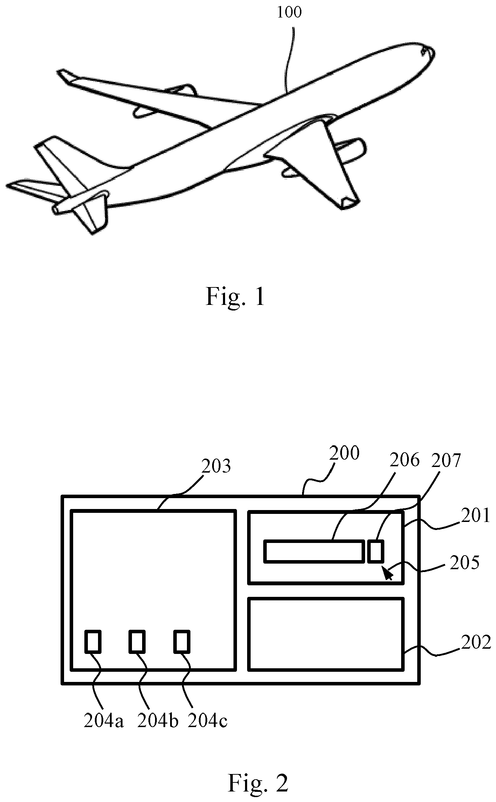

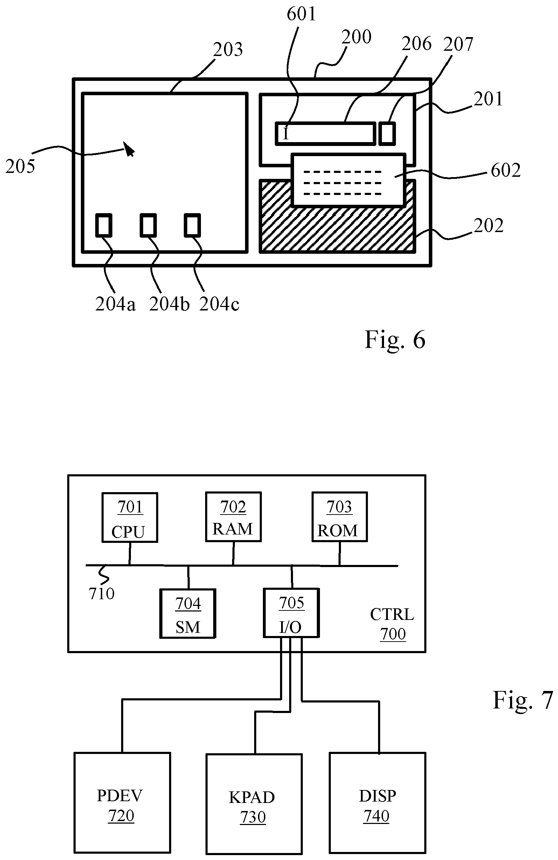

La **Fig. 1** illustre ainsi schématiquement, en perspective, un aéronef 100. L'aéronef 100 est équipé d'une avionique disposant d'au moins une interface homme-machine. L'interface homme-machine est installée dans le cockpit de l'aéronef et est configurée pour permettre à un pilote de l'aéronef d'observer et de manipuler des informations sur un écran de ladite interface homme-machine, et de saisir des informations à transmettre à l'avionique de l'aéronef. Par exemple, les informations saisies sont des informations d'au moins un point de passage de l'aéronef selon un plan de vol. Ledit au moins un point de passage peut être repéré sur une carte de navigation (aérienne ou aéroportuaire) affichée à l'écran. D'autres informations peuvent être ainsi saisies par le pilote de l'aéronef. Un exemple d'agencement matériel permettant d'implémenter l'interface homme-machine est présenté ci-après en relation avec la Fig. 7.

Comme détaillé par la suite, l'interface homme-machine est configurée pour implémenter deux modes de pointage (exclusifs l'un par rapport à l'autre), appelé ici « mode de pointage normal » et « mode de pointage spécifique ».

La **Fig. 2** illustre schématiquement un exemple d'affichage 200 réalisé par une telle interface homme-machine.

L'affichage 200 comporte une zone de saisie de texte 201. L'affichage 200 peut comporter plusieurs zones de saisie de texte. Par le biais de cette zone de saisie de texte 201, le pilote peut saisir des informations grâce à un clavier et transmettre les informations saisies à l'avionique. La zone de saisie de texte 201 comporte un champ 206 d'affichage d'informations saisies et peut comporter un bouton virtuel 207 d'action de validation de saisie de texte. La zone de saisie de texte 201 peut en outre comporter un bouton virtuel (non représenté) d'action d'abandon de saisie de texte.

Le mode de pointage spécifique est actif lorsque qu'une saisie de texte est en cours dans la zone de saisie de texte 201, et le mode de pointage normal est actif lorsque qu'aucune saisie de texte est en cours dans la zone de saisie de texte 201.

La zone de saisie de texte 201 est ainsi active en mode de pointage normal et en mode de pointage spécifique.

L'affichage 200 comporte une zone de carte de navigation 203. Par le biais de cette zone de carte de navigation 203, le pilote peut manipuler une ou plusieurs cartes de navigation (aérienne ou aéroportuaire). La zone de carte de navigation 203 peut proposer différents boutons virtuels 204a, 204b, 204c d'actions (commandes) relatives au contenu de la zone de carte de navigation 203.

Cette zone de carte de navigation 203 est compatible avec une saisie de texte en parallèle. La zone de carte de navigation 203 est donc active en mode de pointage normal et en mode de pointage spécifique.

Ainsi, en mode de pointage spécifique, la zone de saisie de texte 201 et la zone de carte de navigation 203 sont toutes deux actives en même temps. Ces deux zones 201 et 203 ont donc le focus de façon simultanée. En particulier, une interaction dans la zone de carte de navigation 203 ne fait pas perdre le focus de la zone de saisie de texte 201 qui conserve ainsi des informations textuelles déjà saisies et qui reste ainsi prête pour recevoir une saisie de texte après ladite interaction ou même pendant ladite interaction. Cela permet à un utilisateur, en particulier un pilote, de commencer une saisie de texte dans la zone de saisie de texte 201 au moyen d'un dispositif de saisie de texte (par exemple un clavier), puis d'interagir au moyen de l'interface homme-machine avec la carte de navigation dans la zone de carte de navigation 203 (par exemple pour rechercher ou vérifier des informations nécessaires pour la saisie de texte en cours) sans perdre des informations déjà saisies dans la zone de saisie de texte 201, puis de continuer la saisie de texte dans la zone de saisie de texte 201. L'utilisateur n'a pas besoin de réaliser une action spécifique avant de continuer la saisie de texte dans la zone de saisie de texte 201 après avoir manipulé la carte de navigation 203 : il lui suffit de continuer à saisir du texte au moyen du dispositif de saisie de texte. Par exemple, l'utilisateur n'a pas besoin de réaliser une action spécifique telle qu'amener un curseur et cliquer sur la zone de saisie de texte 201 avant de continuer la saisie de texte.

L'affichage 200 comporte une autre zone 202. Cette zone 202 est incompatible avec une saisie de texte en parallèle. Donc, cette autre zone 202 est active en mode de pointage normal, mais est inactive en mode de pointage spécifique. En d'autres termes, en mode de pointage spécifique, un pointage sur ladite autre zone 202 ne réalise pas une commande spécifique qui est associée à l'endroit où le pointage est réalisé dans ladite autre zone 202 et qui serait au contraire exécutée en mode de pointage normal. Par exemple, cette autre zone 202 est une zone prévue pour saisir un nouveau cap de l'aéronef, pour modifier une vitesse ou une altitude courante de l'aéronef, pour régler une fréquence de communication VHF avec le contrôle aérien, etc.

Lorsque l'interface homme-machine comporte un dispositif de pointage distinct de l'écran (tel qu'une souris, ou une boule de commande, ou un pavé tactile) pour permettre au pilote d'utiliser ladite interface homme-machine, l'affichage 200 comporte un curseur 205 (représenté par une flèche sur la Fig. 2). Le pilote utilise le dispositif de pointage en question pour déplacer le curseur 205 sur l'affichage 200, afin de réaliser des opérations de pointage à l'endroit où est positionné le curseur 205.

Lorsque l'interface homme-machine comporte un écran tactile (donc sans dispositif de pointage distinct de l'écran), l'affichage 200 ne nécessite pas de curseur 205.

Dans le mode de pointage normal, le pilote peut interagir avec chaque zone de l'affichage 200, c'est-à-dire que des commandes spécifiques à chaque zone sont possibles par pointage dans ladite zone (par exemple en pointant sur un bouton virtuel de la zone en question). Dans le mode de pointage spécifique, le pilote ne peut interagir qu'avec la zone de saisie de texte 201 et la zone de carte de navigation 203, c'est-à-dire uniquement des commandes spécifiques à la zone de saisie de texte 201 et des commandes spécifiques à la zone de carte de navigation 203 sont possibles par pointage dans la zone en question. Les commandes spécifiques à chaque autre zone 202 sont alors désactivées.

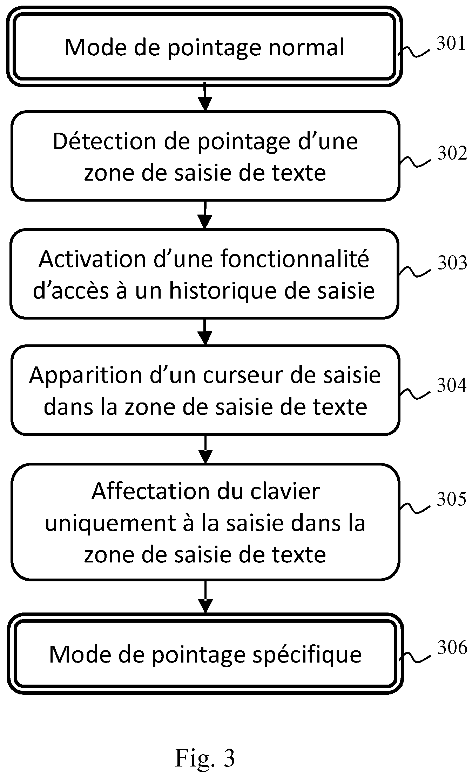

La **Fig. 3** illustre schématiquement un algorithme de basculement du mode de pointage normal au mode de pointage spécifique.

Dans une étape 301, l'interface homme-machine est mode de pointage normal.

Dans une étape 302, l'interface homme-machine détecte un pointage dans la zone de saisie de texte 201.

Dans une étape optionnelle 303, l'interface homme-machine active une fonctionnalité d'accès à un historique de saisie. L'historique de saisie est un enregistrement d'informations précédemment saisies dans la zone de saisie de texte 201, auquel le pilote peut ultérieurement accéder pour réitérer ou poursuivre une saisie d'informations.

Dans une étape 304, l'interface homme-machine fait préférentiellement apparaître un curseur de saisie dans le champ 206 d'affichage d'informations saisies.

Dans une étape 305, l'interface homme-machine affecte le clavier uniquement à la saisie de texte dans la zone de saisie de texte 201. Sur le clavier, seuls les boutons qui sont destinés à une opération relative à la saisie de texte sont concernés. Tout autre bouton qui n'est pas destiné à une opération relative à la saisie de texte n'est pas concerné et peut être affecté à une commande relative à la zone de carte de navigation 203 (ou à une commande d'abandon de saisie de texte).

Dans une étape 306, l'interface homme-machine bascule en mode de pointage spécifique. Puis, il est mis fin à l'algorithme de la Fig. 3.

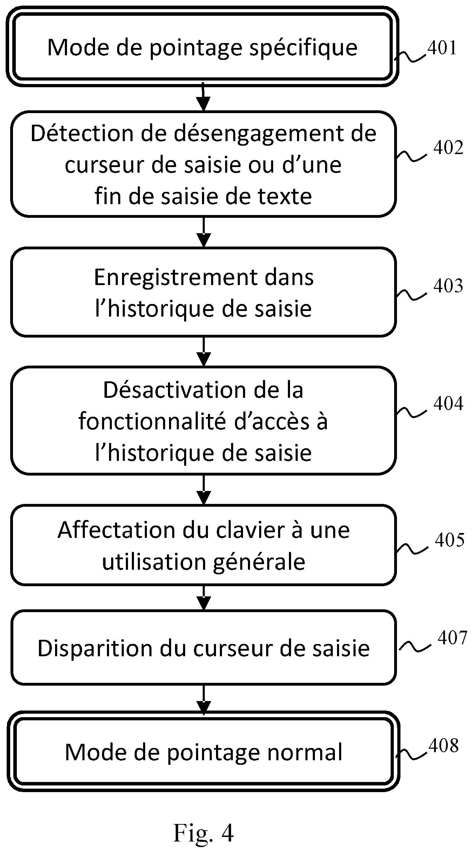

La **Fig. 4** illustre schématiquement un algorithme de basculement du mode de pointage spécifique au mode de pointage normal.

Dans une étape 401, l'interface homme-machine est en mode de pointage spécifique. Une saisie de texte est donc en cours dans la zone de saisie de texte 201.

Dans une étape 402, l'interface homme-machine détecte un désengagement du curseur de saisie, c'est-à-dire un abandon de saisie de texte, ou une validation de saisie de texte. La validation de saisie de texte est par exemple détectée par appui sur un bouton dédié du clavier (par exemple, une touche libellée « ENTER ») ou par pointage sur le bouton virtuel 207 d'action de validation de saisie de texte. L'abandon de saisie de texte est par exemple détecté par appui sur un bouton dédié du clavier (par exemple, une touche libellée « ESC ») ou par pointage sur une zone inactive en mode de pointage spécifique (zone 202).

Dans une étape 403, l'interface homme-machine enregistre dans l'historique de saisie les informations présentes dans le champ 206 d'affichage d'informations saisies (si la fonctionnalité d'accès à un tel historique de saisie est implémentée par l'interface homme-machine). Si le champ 206 d'affichage d'informations saisies est vide, l'étape 403 est omise. Dans un mode de réalisation particulier, l'interface homme-machine enregistre dans l'historique de saisie les informations présentes dans le champ 206 d'affichage d'informations saisies, uniquement en cas d'abandon de saisie de texte. Cela permet de revenir ultérieurement poursuivre une saisie de texte qui aurait été interrompue par le pilote pour exécuter une opération plus prioritaire.

Dans une étape 404 (si l'étape 303 a été effectuée), l'interface homme-machine désactive la fonctionnalité d'accès à l'historique de saisie.

Dans une étape 405, l'interface homme-machine réaffecte le clavier à une utilisation générale de l'interface homme-machine. Ainsi, les boutons utilisés pour la saisie de texte peuvent être utilisés pour réaliser des commandes dans d'autres zones de l'affichage 200.

Dans une étape 406, l'interface homme-machine fait disparaître le curseur de saisie du champ 206 d'affichage d'informations saisies. Lorsque l'interface homme-machine a détecté une validation de saisie de texte dans l'étape 402, l'interface homme-machine fait disparaître les informations saisies du champ 206 d'affichage d'informations saisies. Dans un mode de réalisation particulier, l'interface homme-machine fait disparaître les informations saisies du champ 206 d'affichage d'informations saisies aussi lorsque l'interface homme-machine a détecté un abandon de saisie de texte dans l'étape 402.

Dans une étape 407, l'interface homme-machine bascule en mode de pointage normal. Puis, il est mis fin à l'algorithme de la Fig. 4.

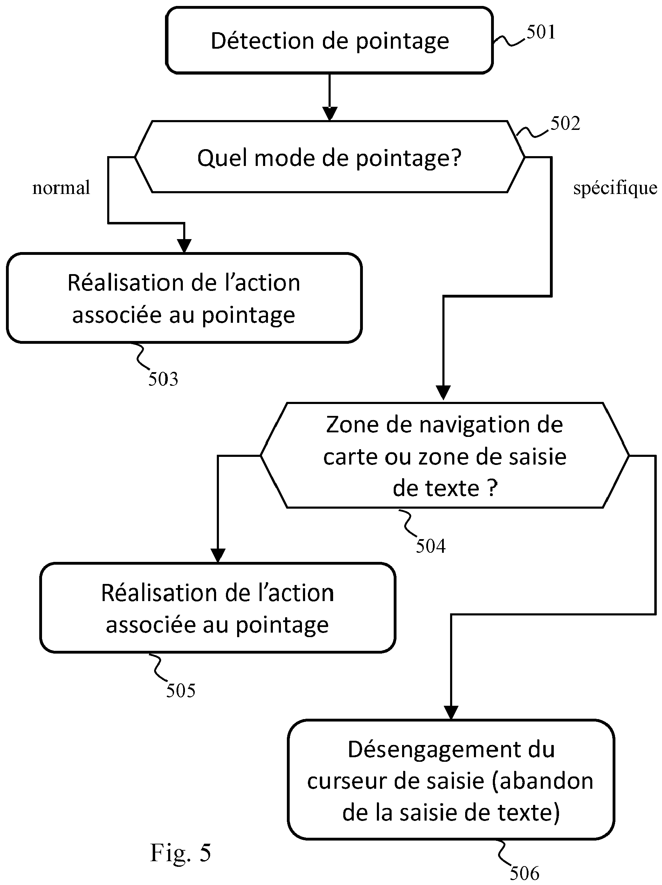

La **Fig. 5** illustre schématiquement un algorithme de procédé de gestion de pointage, selon si l'interface homme-machine est en mode de pointage spécifique ou en mode de pointage normal.

Dans une étape 501, l'interface homme-machine détecte qu'un pointage est réalisé.

Dans une étape 502, l'interface homme-machine détermine dans quel mode de pointage est l'interface homme-machine. Lorsque l'interface homme-machine est dans le mode de pointage normal, une étape 503 est effectuée ; sinon, lorsque l'interface homme-machine est dans le mode de pointage spécifique, une étape 504 est effectuée.

Dans l'étape 503, l'interface homme-machine réalise une action (commande) associée au pointage indépendamment de toute restriction impliquée par la saisie de texte en cours. La commande spécifique, si elle existe, à l'endroit où est réalisé le pointage est réalisée.

Dans l'étape 504, l'interface homme-machine détermine quelle zone de l'affichage 200 est concernée par le pointage. Lorsque la zone de l'affichage 200 qui est concernée par le pointage est la zone de saisie de texte 201 ou la zone de carte de navigation 203, une étape 505 est effectuée ; sinon, une étape 506 est effectuée.

Dans l'étape 505, l'interface homme-machine réalise une action (commande) associée au pointage. La commande spécifique, si elle existe, à l'endroit où est réalisé le pointage est réalisée. Par exemple, un zoom ou un déplacement d'une carte affichée sur la zone de carte de navigation 203, ou un déplacement du curseur de saisie dans la zone de saisie de texte 201. Puis, il est mis fin à l'algorithme de la Fig. 5.

Dans l'étape 506, l'interface homme-machine désengage le curseur de saisie, c'est-à-dire que l'interface homme-machine abandonne la saisie de texte. En effet, le pointage a été ici réalisé en dehors de la zone de saisie de texte 201 et en dehors de la zone de carte de navigation 203, alors que le mode de pointage spécifique était activé (ce qui signifie que les commandes spécifiques de toute autre zone 202 sont désactivées). L'algorithme de la Fig. 4 est donc exécuté et l'interface homme-machine bascule en mode de pointage normal. Puis, il est mis fin à l'algorithme de la Fig. 5.

Dans un mode particulier de réalisation, lorsque le curseur 205 est déplacé sur une dite autre zone 202, un symbole est affiché à l'écran pour avertir que le mode de pointage spécifique est activé et que le fait de pointer (cliquer) sur cette autre zone 202 va entraîner la sortie du mode de pointage spécifique et le retour au mode de pointage normal.

La **Fig. 6** illustre schématiquement l'exemple d'interface homme-machine de la Fig. 2 après avoir basculé en mode de pointage spécifique.

Sur la Fig. 6, le champ 206 d'affichage d'informations saisies laisse apparaître le curseur de saisie 601. De manière illustrative, le curseur de saisie 601 a une forme de « I ». Le curseur de saisie 601 peut avoir une forme autre, par exemple une simple barre verticale. Par exemple, le curseur de saisie 601 clignote, de manière à augmenter sa visibilité dans l'affichage 200.

Sur la Fig. 6, la zone 202 est hachurée pour schématiquement montrer que ladite zone 202 est inactive en mode de pointage spécifique. Ainsi, un pointage sur la zone 202 déclenche une sortie du mode de pointage spécifique, et la saisie de texte en cours dans la zone de saisie de texte 201 est abandonnée.

Dans le mode de pointage spécifique, un bandeau de notification peut être intégré à l'affichage 200 pour indiquer que le mode de pointage spécifique est activé. Un tel bandeau de notification peut en variante être affiché de manière temporaire au changement de mode de pointage (mode de pointage spécifique activé / désactivé).

Dans un mode de réalisation particulier, dans le mode de pointage spécifique, l'affichage 200 peut être modifié par rapport à la Fig. 2 en plaçant un calque opaque sur la zone 202 pour explicitement indiquer que le mode de pointage spécifique est enclenché.

Sur la Fig. 6, la zone de saisie de texte 201 est enrichi pour afficher l'historique de saisie 602, dans lequel le pilote peut effectuer un pointage pour sélectionner une saisie de texte précédemment enregistrée dans l'historique de saisie, et ainsi réitérer une saisie précédente ou poursuivre une saisie de texte abandonnée en cours. Une telle situation survient lorsque la fonctionnalité d'historique de saisie est accédée (par exemple, un pointage sur un bouton virtuel de la zone de saisie de texte 201 permet d'y accéder, ou bien, l'historique de saisie 602 s'affiche automatiquement lorsque la saisie de texte est activée).

Pour enrichir la zone de saisie de texte 201 avec l'historique de saisie 602, la zone de saisie de texte peut être étendue de sorte à recouvrir partiellement une zone 202 inactive en mode de pointage spécifique. Conserver un affichage partiel de ladite zone 202 permet de continuer de voir des informations qui peuvent y être affichées, et aussi permettre aisément un abandon de saisie de texte en cas de besoin.

Un pointage sur la zone de saisie de texte 201 déclenche l'éventuelle commande associée avec l'endroit de la zone de saisie de texte 201 auquel le pointage est réalisé. Par exemple, le pointage sur le bouton virtuel 207 d'action de validation de saisie de texte valide les informations saisies dans le champ 206 d'affichage d'informations saisies.

Un pointage sur la zone de carte de navigation 203 déclenche l'éventuelle commande associée avec l'endroit de la zone de carte de navigation 203 auquel le pointage est réalisé. Par exemple, un pointage à deux doigts avec écartement subséquent des deux doigts au coeur de la zone de carte de navigation 203 déclenche un zoom d'une carte de navigation affichée dans la zone de carte de navigation 203. Ou, selon un autre exemple, un pointage sur le bouton virtuel 204a déclenche une action associée au bouton virtuel 204a.

La **Fig. 7** illustre schématiquement un exemple d'agencement matériel permettant d'implémenter l'interface homme-machine.

L'interface homme-machine comporte un contrôleur CTRL 700, un clavier KPAD 730 et un écran DISP 740. L'écran DISP 740 peut être un écran tactile, par exemple selon une technologie résistive ou une technologie capacitive. L'interface homme-machine peut comporter un dispositif de pointage PDEV 720 distinct de l'écran DISP 740 (tel qu'une souris, ou une boule de commande, ou un pavé tactile), plus particulièrement lorsque l'écran DISP 740 n'est pas tactile et sert uniquement à projeter l'affichage 200.

Dans l'exemple d'agencement matériel de la Fig. 7, le contrôleur CTRL 700 comporte, reliés par un bus de communication 710 : un processeur ou CPU (« Central Processing Unit » en anglais) 701 ; une mémoire vive RAM (« Read-Only Memory » en anglais) 702 ; une mémoire morte 703, par exemple de type ROM (« Read Only Memory » en anglais) ou EEPROM (« Electrically-Erasable Programmable ROM » en anglais) ou de type Flash ; une unité de stockage, telle qu'un support de stockage SM 704 de type disque dur HDD (« Hard Disk Drive » en anglais), ou un lecteur de support de stockage, tel qu'un lecteur de cartes SD (« Secure Digital » en anglais) ; et un gestionnaire d'interfaces d'entrées/sorties I/O 705.

Le gestionnaire d'entrées/sorties I/O 705 permet au contrôleur CTRL 700 d'interagir avec le clavier KPAD 730, l'écran DISP 740 et le dispositif de pointage PDEV 720.

Le processeur 701 est capable d'exécuter des instructions chargées dans la mémoire vive 702 à partir de la mémoire morte 703, d'une mémoire externe, d'un support de stockage (tel qu'une carte SD), ou d'un réseau de communication (non représenté). Lorsque l'interface homme-machine est mise sous tension, le processeur 701 est capable de lire de la mémoire vive 702 des instructions et de les exécuter. Ces instructions forment un programme d'ordinateur causant l'implémentation, par le processeur 701, des étapes et algorithmes décrits ici.

Tout ou partie des étapes et algorithmes décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Spécifie Integrated Circuit » en anglais). D'une manière générale, le contrôleur CTRL 700 comporte de la circuiterie électronique adaptée et configurée pour implémenter les étapes et algorithmes décrits ici.

## Revendications

1. Procédé de gestion de pointage pour un affichage (200) sur un écran (730) d'une interface homme-machine de cockpit d'aéronef (100), l'affichage (200) comportant des zones parmi lesquelles :
- une zone de saisie de texte (201),
- une zone de carte de navigation (203), et
- au moins une autre zone (202),
chaque zone étant associée à des commandes réalisables par pointage sur ladite zone,
un contrôleur (700) de l'interface homme-machine implémentant deux modes de pointage, l'un dit mode de pointage spécifique qui est actif lorsque qu'une saisie de texte est en cours dans la zone de saisie de texte (201), et l'autre dit mode de pointage normal qui est actif lorsque qu'aucune saisie de texte est en cours dans la zone de saisie de texte (201), tels que :
- en mode de pointage normal, un pointage sur une dite zone déclenche la commande éventuellement associée à l'endroit où est réalisé le pointage sur la zone en question, et
- en mode de pointage spécifique, un pointage sur la zone de saisie de texte (201) ou sur la zone de carte de navigation (203) déclenche la commande éventuellement associée à l'endroit où est réalisé le pointage sur la zone en question, et un pointage sur ladite au moins une autre zone (202) déclenche un abandon de la saisie de texte, les commandes de ladite au moins une autre zone (202) étant désactivées contrairement aux commandes de la zone de saisie de texte (201) et de la zone de carte de navigation (203).

2. Procédé selon la revendication 1, dans lequel en mode de pointage spécifique le contrôleur (700) affecte le focus à la fois à la zone de saisie de texte (201) et à la zone de carte de navigation (203) de façon à permettre à un utilisateur de mettre en oeuvre l'enchaînement d'étapes suivantes :
- saisir du texte dans la zone de saisie de texte (201) ;
- interagir au moyen de l'interface homme-machine avec la carte de navigation dans la zone de carte de navigation (203) sans perdre des informations déjà saisies dans la zone de saisie de texte (201) ;
- continuer la saisie de texte dans la zone de saisie de texte (201) sans avoir besoin de réaliser une action spécifique avant de continuer la saisie de texte.

3. Procédé selon la revendication 1 ou 2, dans lequel le contrôleur (700) affecte un clavier (720) de l'interface homme-machine spécifiquement à la saisie de texte en mode de pointage spécifique et affecte le clavier (720) à une utilisation générale de l'interface homme-machine en mode pointage normal.

4. Procédé selon l'une quelconque des revendications 1 à 3, dans lequel lorsqu'un abandon de la saisie de texte est déclenché, toute information saisie dans la zone de saisie de texte (201) et non validée est enregistrée dans un historique de saisie, et une fonctionnalité d'accès à l'historique de saisie étant activée en mode de pointage spécifique et pas en mode de pointage normal.

5. Procédé selon la revendication 4, dans lequel toute information saisie dans la zone de saisie de texte (201) et validée est aussi enregistrée dans l'historique de saisie.

6. Procédé selon la revendication 4 ou 5, dans lequel lorsque la fonctionnalité d'accès à l'historique de saisie est activée, la zone de saisie de texte (201) est étendue pour afficher l'historique de saisie (602) de sorte à recouvrir partiellement une zone (202) inactive en mode de pointage spécifique.

7. Produit programme d'ordinateur comportant des instructions de code de programme causant une implémentation du procédé selon l'une quelconque des revendications 1 à 6, lorsque lesdites instructions sont exécutées par un processeur d'interface homme-machine de cockpit d'aéronef.

8. Support de stockage d'informations stockant un programme d'ordinateur comportant des instructions de code de programme causant une implémentation du procédé selon l'une quelconque des revendications 1 à 6, lorsque lesdites instructions sont lues et exécutées par un processeur d'interface homme-machine de cockpit d'aéronef.

9. Interface homme-machine de cockpit d'aéronef (100) comportant un écran (730) et un contrôleur (700), le contrôleur comportant de la circuiterie électronique configurée pour effectuer une gestion de pointage pour un affichage (200) sur l'écran (730), l'affichage (200) comportant des zones parmi lesquelles :
- une zone de saisie de texte (201),
- une zone de carte de navigation (203), et
- au moins une autre zone (202),
chaque zone étant associée à des commandes réalisables par pointage sur ladite zone,
la circuiterie électronique étant configurée pour implémenter deux modes de pointage, l'un dit mode de pointage spécifique qui est actif lorsque qu'une saisie de texte est en cours dans la zone de saisie de texte, et l'autre dit mode de pointage normal qui est actif lorsque qu'aucune saisie de texte est en cours dans la zone de saisie de texte, tels que :
- en mode de pointage normal, un pointage sur une dite zone déclenche la commande éventuellement associée à l'endroit où est réalisé le pointage sur la zone en question, et
- en mode de pointage spécifique, un pointage sur la zone de saisie de texte (201) ou sur la zone de carte de navigation (203) déclenche la commande éventuellement associée à l'endroit où est réalisé le pointage sur la zone en question, et un pointage sur ladite au moins une autre zone (202) déclenche un abandon de la saisie de texte, les commandes de ladite au moins une autre zone étant désactivées contrairement aux commandes de la zone de saisie de texte (201) et de la zone de carte de navigation (203).

10. Interface homme-machine selon la revendication 9, dans lequel en mode de pointage spécifique la circuiterie électronique du contrôleur (700) est configurée pour affecter le focus à la fois à la zone de saisie de texte (201) et à la zone de carte de navigation (203) de façon à permettre à un utilisateur de mettre en oeuvre l'enchaînement d'étapes suivantes :
- saisir du texte dans la zone de saisie de texte (201) ;
- interagir au moyen de l'interface homme-machine avec la carte de navigation dans la zone de carte de navigation (203) sans perdre des informations déjà saisies dans la zone de saisie de texte (201) ;
- continuer la saisie de texte dans la zone de saisie de texte (201) sans avoir besoin de réaliser une action spécifique avant de continuer la saisie de texte.
